# EUROPEAN PATENT APPLICATION

(11) **EP 4 715 721 A1**
(43) Date of publication of application: **25.03.2026**
(21) Application number: 24810909.2
(22) Date of filing: 10.05.2024
(51) Int. Cl.: G06Q 50/02

(54) **INFORMATION PROCESSING DEVICE, INFORMATION PROCESSING METHOD, AND PROGRAM**

(30) Priority: 19.05.2023 JP 2023083234
(71) Applicant: OMRON Corporation, Kyoto-shi, Kyoto 600-8530 (JP)
(72) Inventor: OGUSHI, Takahiro, Kyoto-shi, Kyoto 600-8530 (JP); NARA, Yusuke, Kyoto-shi, Kyoto 600-8530 (JP); SUGIOKA, Masayuki, Kyoto-shi, Kyoto 600-8530 (JP); KATO, Yutaro, Kyoto-shi, Kyoto 600-8530 (JP); WANG, Ying, Kyoto-shi, Kyoto 600-8530 (JP)
(74) Representative: Marks & Clerk LLP
(86) International application number: PCT/JP2024/017326
(87) International publication number: WO 2024/241901

(57) **Abstract**

An information processing device 200 includes an acquisition unit 211 configured to acquire a plurality of images captured by one or more imaging devices 311 in a specific region of a farm field and including one or more crops, an identification unit 212 configured to identify an overlapping region overlapping between regions of the plurality of images, a first calculation unit 216a configured to calculate a first number of the crops in the overlapping region, a second calculation unit 216b configured to calculate a second number of the crops in a non-overlapping region other than the overlapping region in each of the regions of the plurality of images, and a third calculation unit 216c configured to calculate a third number of the crops in the specific region based on the first number and the second number.

## Description

### TECHNICAL FIELD

The present invention relates to an information processing device, an information processing method, and a program.

### BACKGROUND OF INVENTION

A technique for calculating the number of crops cultivated in a farm field is known. For example, Patent Document 1 below discloses a system in which a work vehicle captures an image of a fruit plant by using an imaging device while traveling between a plurality of cultivation beds, the captured image is processed to detect a fruit, and the total number of fruits is calculated.

### CITATION LIST

### PATENT LITERATURE

Patent Document 1: JP 2019-17396 A

### SUMMARY

### TECHNICAL PROBLEM

Here, in a case where the number of crops in a specific region of the farm field is calculated, a plurality of the images need to be captured by using the imaging device. Unfortunately, Patent Document 1 has room for technical improvement in calculating the number of crops with high accuracy to avoid omission or redundancy from the plurality of images.

To solve the above problem, an object of the present invention is to provide an information processing device, an information processing method, and a program that can accurately calculate the number of crops from a plurality of captured images of crops.

### SOLUTION TO PROBLEM

An information processing device according to one aspect of the present disclosure includes an acquisition unit configured to acquire a plurality of images captured by one or more imaging devices in a specific region of a farm field and including one or more crops, an identification unit configured to identify an overlapping region overlapping between regions of the plurality of images, a first calculation unit configured to calculate a first number of the crops in the overlapping region, a second calculation unit configured to calculate a second number of the crops in a non-overlapping region other than the overlapping region in each of the regions of the plurality of images, and a third calculation unit configured to calculate a third number of the crops in the specific region based on the first number and the second number.

An information processing method according to another aspect of the present disclosure includes, by a computer, acquiring a plurality of images captured by one or more imaging devices in a specific region of a farm field and including one or more crops, identifying an overlapping region overlapping between regions of the plurality of images, calculating a first number of the crops in the overlapping region, calculating a second number of the crops in a non-overlapping region other than the overlapping region in each of the regions of the plurality of images, and calculating a third number of the crops in the specific region based on the first number and the second number.

A program according to another aspect of the present disclosure causes a computer to execute an acquisition function of acquiring a plurality of images captured by one or more imaging devices in a specific region of a farm field and including one or more crops, an identification function of identifying an overlapping region overlapping between regions of the plurality of images, a first calculation function of calculating a first number of the crops in the overlapping region, a second calculation function of calculating a second number of the crops in a non-overlapping region other than the overlapping region in each of the regions of the plurality of images, and a third calculation function of calculating a third number of the crops in the specific region based on the first number and the second number.

### ADVANTAGEOUS EFFECTS OF INVENTION

The present invention can provide an information processing device, an information processing method, and a program that can accurately calculate the number of crops from a plurality of captured images of the crops.

### BRIEF DESCRIPTION OF THE DRAWINGS

FIG. 1 is a diagram schematically illustrating a smart agriculture system according to the present embodiment.
FIG. 2 is a conceptual diagram illustrating a farm field of view of a step surface S in a farm field illustrated in FIG. 1 in more detail.
FIG. 3 is a schematic view illustrating an example of a method of imaging by an imaging device according to the present embodiment.
FIG. 4 is a schematic view illustrating an example of a method of identifying an overlapping region in a plurality of images and a coordinate processing method according to the present embodiment.
FIG. 5 is a schematic view illustrating an example of the method of identifying the overlapping region in a plurality of images according to the present embodiment.
FIG. 6 is a diagram illustrating an example of a functional configuration of an information processing device according to the present embodiment.
FIG. 7 is a diagram illustrating an operation example of the information processing device according to the present embodiment.
FIG. 8 is a diagram illustrating an example of a hardware configuration of the information processing device according to the present embodiment.
FIG. 9 is a diagram illustrating an example of a method of synthesizing an image according to the present embodiment.

### DESCRIPTION OF EMBODIMENTS

Hereinafter, an embodiment of the present invention (hereinafter, referred to as "the present embodiment") will be described in detail with reference to the drawings as necessary, but the present invention is not limited thereto, and various variations can be made without departing from the gist thereof. In the drawings, the same elements are denoted by the same reference numerals, and redundant description will be omitted. A positional relationship such as up, down, left, and right is based on a positional relationship illustrated in the drawings unless otherwise specified. Further, dimensional ratios in the drawings are not limited to ratios illustrated in the drawings.

### 1. System

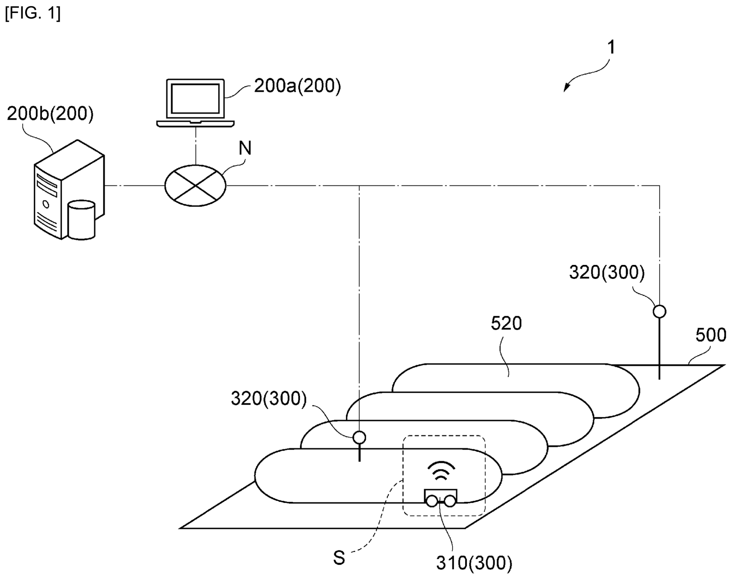

FIG. 1 is a diagram schematically illustrating a smart agriculture system 1 according to an embodiment of the present invention. As illustrated in FIG. 1, the smart agriculture system 1 includes an information processing device 200 and a measurement device 300. The measurement device 300 may be various sensors such as a mobile sensor 310, a fixed sensor 320, and/or the like for example. The information processing device 200 may be a terminal device 200a, a server device 200b, and/or the like. The information processing device 200 and the measurement device 300 may be connected via a network N.

In the smart agriculture system 1, an image of crops in a farm field (hereinafter, also simply referred to as "image") is acquired by using various sensors such as the fixed sensor 320 and the mobile sensor 310. Then, the information processing device 200 (for example, the server device 200b) accumulates the acquired images. The information processing device 200 (for example, the terminal device 200a) calculates the number of crops based on the image of crops. The crops may be, for example, fruits cultivated by trellising, such as grapes, kiwifruits, or pears. The crops may also be, specifically, flowers or fruits of fruits or the like. As another example, the crops may be vegetables, such as tomatoes, eggplants, or paprika.

### Information processing device

The information processing device 200 may be a terminal device such as a laptop or a smartphone, or a server device such as a storage server. The information processing device 200 executes a predetermined program to connect to the measurement device 300 and transmit and receive various types of data, store the various types of data received, output the various types of data to the user, and accept an instruction from the user to the measurement device 300 or the like through voice input, operation input, or the like.

The server device 200b may be a cloud server or may be an edge server. The edge server may be installed in the farm field or around the farm field to perform data processing and analysis. Accordingly, since the data is not transmitted to the cloud server and the processing is executed on the edge server side, a delay in communication is less likely to occur, and the processing load can be distributed. For example, the server device 200b as an edge server may collect images of crops from the measurement device 300, and a group of the collected images may be accumulated in the server device 200b, which is a cloud server. Then, the terminal device 200a may acquire the accumulated images and calculate the number of the crops. The terminal device 200a having the same function as the edge server may be provided instead of the edge server.

### Measurement device

The measurement device 300 measures the crops and the like in the farm field and the surrounding environment, generates data indicating the result of the measurement (hereinafter, also referred to as "measurement data"), and transmits the data to the information processing device 200 and the like. The measurement device 300 is not particularly limited, and may be, for example, a device including various sensors provided at any position in the farm field, a drone including various sensors and flying in the farm field, an unmanned vehicle (hereinafter, also referred to as "mobile robot") that can travel in the farm field, a smartphone including various sensors, a handheld computer device, or a terminal operated by a person such as a wearable terminal. Here, the sensor is not particularly limited as long as the sensor includes an image sensor, and may further include an environment sensor.

The image sensor is one aspect of an imaging device. The image sensor is not particularly limited as long as the image sensor is a sensor capable of capturing a still image or a moving image. The image sensor may be, for example, a fixed-point camera installed in a farm field, a camera of a terminal such as a wearable device, or a camera installed in a mobile measurement device 300. The image sensor may be, for example, configured to capture time-series images (for example, moving image) by continuously generating images in units of frames.

The environment sensor is a sensor for measuring environmental information in the farm field of crops 520. The environment sensor is not particularly limited, and examples thereof may include a weather sensor, a soil sensor, a gas sensor, and the like.

The mobile sensor 310 may be, for example, an unmanned vehicle that travels in a farm field and is equipped with various sensors. The unmanned vehicle is one aspect of a moving object. The mounted sensor may be, for example, one or more image sensors for capturing an image of the crop, a GPS receiving antenna for measuring position information (for example, latitude and longitude), and/or the like. In the present embodiment, an example in which a plurality of the image sensors are installed in the mobile sensor 310 will be described, but the number of image sensors according to the present embodiment is not limited thereto. The number of image sensors according to the present embodiment may be, for example, one or three or more. The fixed sensor 320 may be equipped with a fixed-point camera, for example.

### Network

The network N is configured by a wireless network or a wired network. Examples of the network include a mobile phone network, a personal handy-phone system (PHS) network, a wireless local area network (Communication conforming to Local Area Network, IEEE802.11 (so-called WI/Fi (registered trademark)) is included.), 3rd generation (3G), long term evolution (LTE), 4th generation (4G), 5th generation (5G), WiMAX (registered trademark), infrared communication, visible light communication, Bluetooth (registered trademark), a wired LAN, a telephone line, a power line communication network, and a network conforming to IEEE1394 or the like.

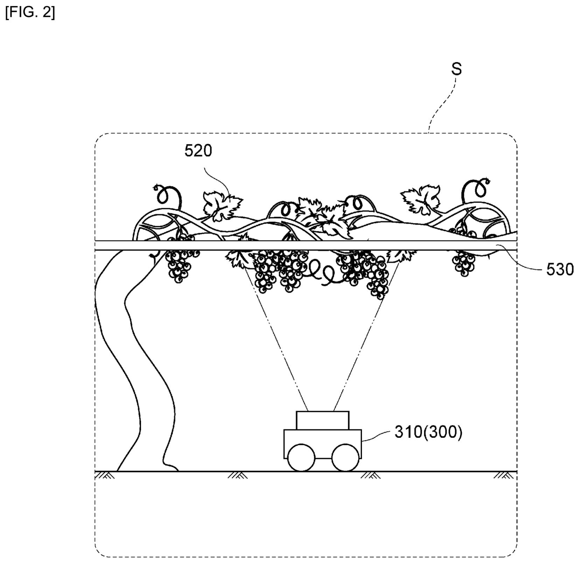

FIG. 2 is a conceptual diagram illustrating a farm field of view of a step surface S in a farm field illustrated in FIG. 1 in more detail. As illustrated in FIG. 2, a crop with fruit at ends of tree branches is disclosed, and a trellis 530 that supports the branches is installed under the branches. Here, the mobile sensor 310 may capture an image of the crop while traveling under the branches and the trellis 530, with the sensor directed approximately upward relative to the ground.

In the smart agriculture system 1, for example, a plurality of imaging devices installed in the mobile sensor 310 or the like capture images of crops cultivated in a specific region, and the number of crops in the specific region is calculated from the captured images. The specific region is a region, the number of crops in which is calculated in the farm field, and may be, for example, one or more sections among a plurality of sections in the farm field, or may be a region per unit area. In this way, when each of the plurality of imaging devices captures an image of the crop cultivated in the specific region, a plurality of images are captured with regions of the plurality of images partially overlapped to avoid, for example, omission of imaging. The number of crops can be calculated in consideration of the regions overlapping (hereinafter, also referred to as "overlapping region") and the regions not overlapping (hereinafter, also referred to as "non-overlapping region").

### 2. Overview of image capturing and overlapping region identification

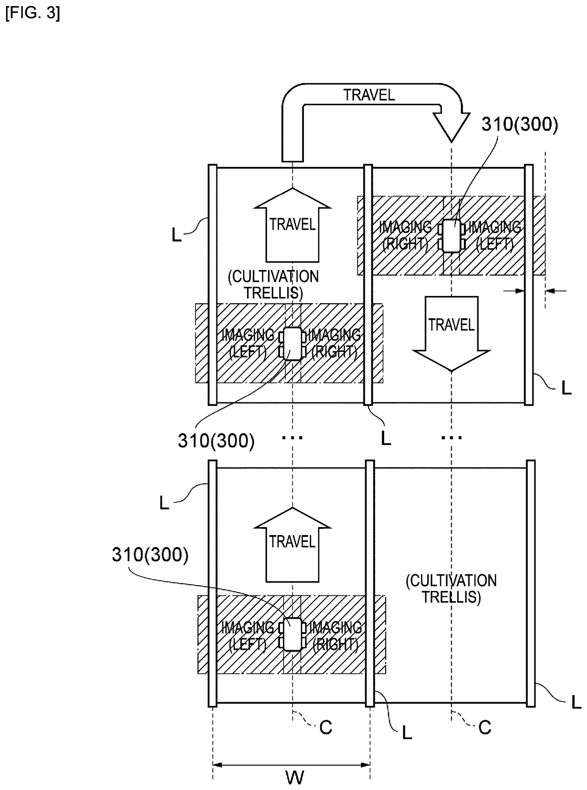

An example of the image capturing and overlapping region identification processing using the mobile sensor 310 will be described with reference to FIGS. 3 to 5. In this example, an example of using an image sensor on the left side (hereinafter, also referred to as a "left image sensor") 311a and an image sensor on the right side (hereinafter, also referred to as a "right image sensor") 311b disposed in parallel to each other will be described. The left image sensor 311a and the right image sensor 311b are respective aspects of a first imaging device and a second imaging device. The left image sensor 311a and the right image sensor 311b capture images of the crop cultivated on the trellis 530, for example, with the upward direction with respect to the ground being the image capturing direction. The left image sensor 311a and the right image sensor 311b are also collectively referred to as "image sensor 311" in a case where there is no particular need for distinction therebetween or the like, for example.

### 2-1. Image capturing

FIG. 3 is a schematic view illustrating a state in which the mobile sensor 310 travels in the specific region of a farm field as viewed from above. As illustrated in FIG. 3, the trellis 530 includes poles arrayed at an interval of a width W (for example, 4 to 5 m). The mobile sensor 310 travels near a center line C of a traveling path that is a region between rows L of the poles. The mobile sensor 310 has the left image sensor 311a and the right image sensor 311b mounted in the left-right direction to capture images of regions in the left-right direction. The left-right direction is a direction substantially orthogonal to the traveling direction of the mobile sensor 310 (the longitudinal direction in the region between the rows of the poles). For example, after traveling from one end to the other end of the traveling path in the longitudinal direction, the mobile sensor 310 turns back and travels from one end to the other end of the adjacent traveling path in the longitudinal direction in the direction opposite to the previous direction. The left image sensor 311a and the right image sensor 311b may be set so that respective imaging ranges overlap each other to avoid, for example, omission of imaging of crops. The mobile sensor 310 may be set so that when capturing images in two adjacent traveling paths, the respective imaging ranges overlap each other to avoid, for example, omission of imaging of crops.

### 2-2. Identification of overlapping region using plurality of adjacent image sensors

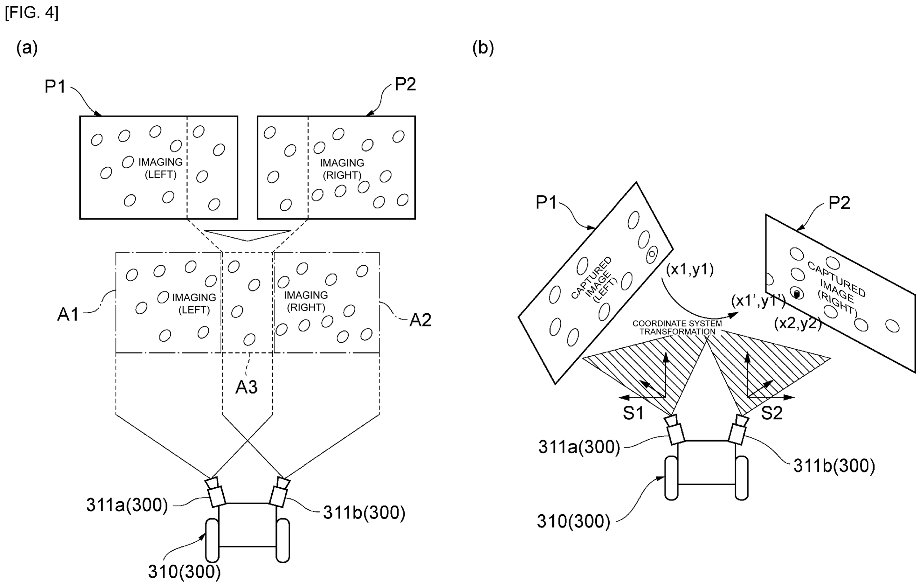

FIG. 4(a) is a schematic view illustrating the overlap between the respective imaging ranges of the left image sensor 311a and the right image sensor 311b. An image (hereinafter, also referred to as "left image") P1 captured by the left image sensor 311a and an image (hereinafter, also referred to as "right image") P2 captured by the right image sensor 311b, respectively on the left side and the right side relative to the traveling direction, include a region where the same crops and the like are redundantly captured. The information processing device 200 acquires the left image P1 and the right image P2, identifies a region A3 overlapping in the images as the overlapping region, and identifies the regions A1 and A2 not overlapping as the non-overlapping region.

### 2-3. Coordinate transformation

FIG. 4(b) is a schematic view illustrating an example of a method of coordinate processing for an image by the mobile sensor 310. The information processing device 200 may perform coordinate transformation based on relative positions of the left image sensor 311a and the right image sensor 311b, to cause one of a coordinate system S1 of the left image P1 and a coordinate system S2 of the right image P2 to match the other of the coordinate system S1 and the coordinate system S2. Specifically, the information processing device 200 may transform the center coordinates of the crops in the coordinate system S1 detected in the left image P1 to those in the coordinate system S2. The information processing device 200 then integrates the crops detected in the left image P1 and the right image P2 based on the center coordinates of the crops in the coordinate system S2. For example, as an example of the integration, for the detected crops, the information processing device 200 may identify, as the same crop, a plurality of crops whose center coordinates are within a predetermined range, in other words, a plurality of crops with the center coordinates at distances not exceeding a threshold value.

### 2-4. Identification of overlapping region by turnback traveling

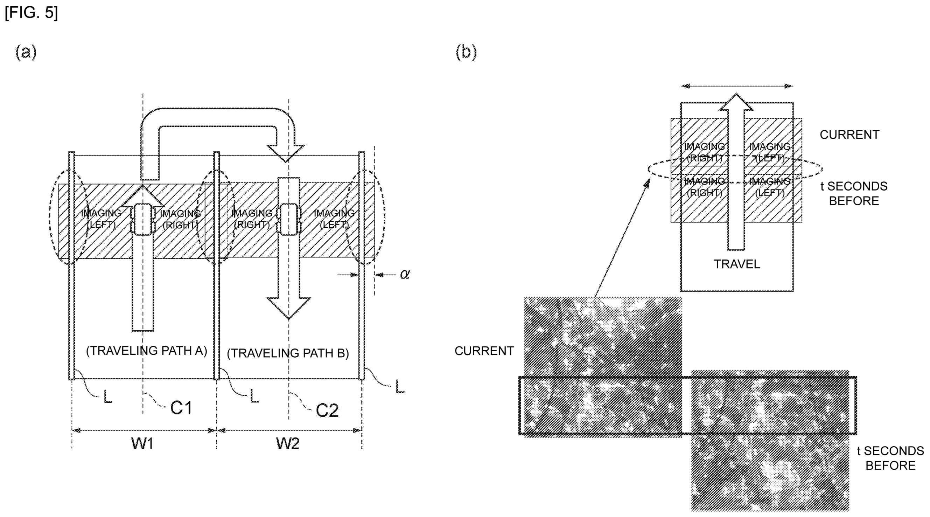

FIG. 5(a) is a schematic view illustrating an overlap of the imaging ranges before and after the turn back to the adjacent traveling path in the turnback traveling of the mobile sensor 310. The imaging range of the right image sensor on a traveling path A is from a center line C1 to the right end + α in the lateral direction of the traveling path A. The imaging range of the right image sensor on a traveling path B is from a center line C2 to the right end + α in the lateral direction of the traveling path B. The right images captured on the respective traveling paths A and B may be caused to overlapped by the amount α (the portion surrounded by the broken line ellipse). The value of α may be set so that a width W1 of the traveling path falls within the imaging range even if the mobile sensor 310 traveling is displaced from the center or tilted to the left or right for example. In a case where a watering hose is installed on the trellis 530 along the row of the poles, the information processing device 200 may detect the watering hose as a reference (hereinafter, also referred to as a "marker object") in each of the left image and the right image, to identify the overlapping region in the two right images of the traveling paths A and B. Specifically, the information processing device 200 may identify the outside of the detected watering hose as the overlapping region and the inside of the detected watering hose as the non-overlapping region for each of the two right images of the traveling paths A and B. When synthesizing the two right images of the traveling paths A and B and identifying the overlapping region, the information processing device 200 may rotate the right image of the traveling path B by 180 degrees to align the orientation of the right image of the traveling path B with the orientation of the right image of the traveling path A as preprocessing, for example.

The marker object may be any object that may serve as the reference among objects provided for cultivating crops, and may be, for example, a structure such as a cultivation trellis, part of a building such as an agricultural house (for example, a framework portion of a structure such as a pole or a joint portion), a signboard installed in a farm field, a string rope for supporting, or the like.

### 2-5. Identification of overlapping region in traveling direction

FIG. 5(b) is a schematic view illustrating an overlap of the imaging ranges of time-series images as a result of the traveling of the mobile sensor 310. In time-series images such as frame images of a moving image, imaging ranges may overlap between adjacent images in the time-series images, for example, between the left image P1 and the right image P2 at a specific time point and a left image P1' and a right image P2' t seconds before the specific time point (for example, a portion surrounded by a broken line ellipse). The information processing device 200 may acquire, for example, position information associated with time of measurement by the mobile sensor 310, and calculate a displacement for t seconds based on the position information. The information processing device 200 may identify the overlapping region between the left image P1 and the right image P2 and the left image P1' and the right image P2' based on the displacement.

With the above configuration, the smart agriculture system 1 can calculate the number of crops in the specific region based on the number of crops calculated in each of the overlapping region and the non-overlapping region. Therefore, the number of crops can be calculated in consideration of the overlap between the plurality of images. Therefore, even a plurality of images captured with the imaging ranges overlapping to avoid, for example, omission of imaging of crops can avoid redundant counting. Therefore, the number of crops can be calculated with high accuracy from a plurality of captured images of the crops.

### 3. Functional configuration

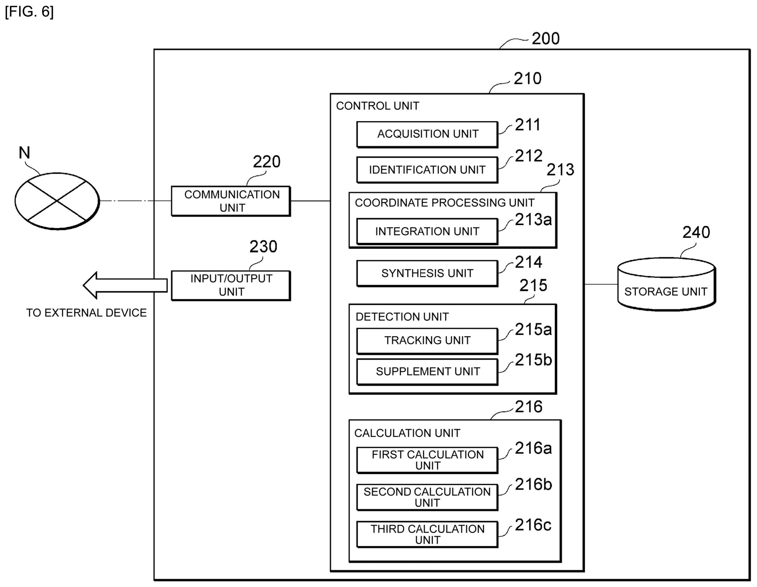

With reference to FIG. 6, a functional configuration of the information processing device 200 according to the present embodiment will be described. As illustrated in FIG. 6, the information processing device 200 includes a control unit 210, a communication unit 220, an input/output unit 230, and a storage unit 240.

### Control unit

The control unit 210 includes an acquisition unit 211, an identification unit 212, and a calculation unit 216. The control unit 210 may include, for example, a coordinate processing unit 213, a synthesis unit 214, and/or a detection unit 215.

### Acquisition unit

The acquisition unit 211 acquires various types of data from the measurement device 300, another information processing device 200, the storage unit 240, or the like. The acquisition unit 211 may store the acquired various types of data in the storage unit 240. The acquisition unit 211 acquires a plurality of images captured by one or more image sensors 311 in the specific region of the farm field and including one or more crops. Specifically, the acquisition unit 211 receives data indicating an image including the crop (hereinafter, also referred to as "image data") from the image sensor 311 or another information processing device 200 via the communication unit 220. The image data is one of measurement data pieces, and may include (or may be associated with), for example, date and time information, position information, and/or the like at the point when the image is captured. The image data including the left image P1 and the right image P2 described in the examples of FIGS. 3 to 5, may include association between these images.

The acquisition unit 211 may calculate the displacement of the mobile sensor 310 in a predetermined period such as an image capturing time based on the acquired position information. The acquisition unit 211 may store information indicating the calculated displacement in the storage unit 240.

For example, the acquisition unit 211 may acquire, as an image including one or more crops, an image of the crops captured by one or more image sensors 311 along a predetermined direction (for example, the traveling direction of the mobile sensor 310).

For example, when the image sensor 311 captures an image of the crop while moving, the acquisition unit 211 may acquire the displacement of the image sensor from the image sensor 311 or the like (or by referring to the storage unit 240). The displacement of the image sensor 311 may be, for example, the displacement of the mobile sensor 310 with the image sensor 311 installed.

### Identification unit

The identification unit 212 identifies the overlapping region where regions of the plurality of images overlap each other. Possible examples of the overlap to be identified by the identification unit 212 include (1) the overlap caused by a plurality of adjacent image sensors described in the example of 2-2., (2) the overlap as a result of the turnback traveling described in the example of 2-4., (3) the overlap in the traveling direction described in the example of 2-5., and the like. Regarding the overlap of the above (1), for example, a combination of the left image P1 and the right image P2 may be the overlapping region identification target. Regarding the overlap of the above (1) and (2), the identification unit 212 may identify a combination of a plurality of images as the overlapping region identification target, for example, based on the position information and/or the date and time information in image data.

For example, the identification unit 212 may calculate the similarity for each unit region in each of the left image P1 and the right image P2, and identify, as the overlapping region, each unit region with the calculated similarity exceeding a threshold value. The identification unit 212 may calculate, as the similarity for each unit region of the left image P1 and the right image P2, the similarity of a feature amount related to the shape of each of the crops detected by the detection unit 215 and the similarity of the feature amount related to the arrangement of each of the crops. The identification unit 212 may calculate the overall similarity based on each of the calculated results. In this case, the identification unit 212 may perform the calculation with a large relative weight on the feature amount related to the arrangement compared with the feature amount related to the shape, to prioritize the arrangement of the crops over the shape thereof.

When the one or more image sensors 311 include a first image sensor (for example, the left image sensor 311a) and a second image sensor (for example, the right image sensor 311b), the identification unit 212 may identify, as the overlapping region, a region in which a region of an image (for example, the left image P1) captured by the first image sensor and a region of an image (for example, the right image P2) captured by the second image sensor overlap each other. Such a configuration can avoid calculation of the redundant number of crops even when two or more image sensors 311 capture images with overlapping imaging ranges to avoid, for example, omission of imaging,.

For example, the identification unit 212 may identify, as the overlapping region, a region formed as a result of overlap between end portions of a plurality of images captured in respective adjacent rows among a plurality of rows (for example, the traveling paths A and B) arranged in a predetermined direction. Such a configuration can calculate the number of crops in consideration of the overlap even by overlapping the images captured in each of the adjacent rows among the plurality of rows formed along the predetermined direction in imaging the crop is captured in the predetermined direction.

When the plurality of images are time-series images (for example, moving image) captured by the image sensor 311, the identification unit 212 may identify, for example, an overlapping region between images (in other words, between frames) adjacent in time series as the overlapping region. Such a configuration can calculate the number of crops in consideration of overlapping regions in time-series images such as a moving image.

The identification unit 212 may identify the overlapping region based on, for example, the displacement of the image sensor 311 acquired by the acquisition unit 211. Such a configuration can identify the overlapping region in the time-series images or the like in consideration of the movement even when the image sensor 311 captures the images of the crop while moving.

### Coordinate processing unit

When the one or more image sensors 311 include the first image sensor and the second image sensor, the coordinate processing unit 213 causes the coordinate system of a first image captured by the first image sensor to match the coordinate system of a second image captured by the second image sensor based on relative positions of the first image sensor and the second image sensor. The coordinate processing unit 213 may perform coordinate transformation to cause, for example, one of the coordinate system of the first image and the coordinate system of the second image to match the other of the coordinate system of the first image and the coordinate system of the second image.

The coordinate processing unit 213 includes an integration unit 213a. The integration unit 213a integrates the crops in the overlapping region based on the center coordinate of each of the crops included in the first image and the second image with the coordinate system matched.

### Synthesis unit

The synthesis unit 214 synthesizes two or more images of the plurality of target images of the specific region and generates a synthetic image. The synthesis unit 214 may synthesize the plurality of images to generate the synthetic image based on the overlapping region identified by the identification unit 212, for example. Specifically, the synthesis unit 214 may generate a synthetic image to be the overlapping portion when synthesizing the identified overlapping regions. When the synthesizing processing by the synthesis unit 214 and the coordinate transformation processing by the coordinate processing unit 213 are executed in synthesis, for example, the synthesizing processing may be executed after the coordinate transformation processing is executed.

### Detection unit

The detection unit 215 detects one or more crops included in the image acquired by the acquisition unit 211 using an image processing technique such as machine learning, deep learning, or pattern recognition. The detection unit 215 may identify information such as the size, color, shape, or position in the image of each of the one or more crops (hereinafter, these are also collectively referred to as "crop attribute information") at the time of, for example, detection. The detection unit 215 may, for example, provide identification information for identifying each of the one or more crops to each of the one or more detected crops, and store the identification information, the crop attribute information, the date and time information and/or the position information in the image data, and other measurement data in the storage unit 240 in association with each other.

The detection unit 215 may detect the crop before the overlapping region is identified by the identification unit 212 or may detect the crop after the overlapping region is identified, for example. In the latter case, the detection unit 215 may detect the crop for each overlapping region and/or each non-overlapping region, for example.

The detection unit 215 may determine whether the crop detected is incomplete (or complete) when, for example, detecting the crop. The incomplete crop may be, for example, a crop that is not included in a complete state, in a region of an image that is the detection target. Specifically, the detection unit 215 may determine that a crop in a state of having a part thereof missing due to a boundary between a plurality of regions or an end of a region, as a crop not included in a complete state in the region. The detection unit 215 may associate information indicating a result of the determination on whether the crop is incomplete with each of the one or more crops detected.

When the plurality of images acquired by the acquisition unit 211 are time-series images captured by the image sensor 311, the detection unit 215 may detect each of one or more crops in each of the time-series images, for example.

The detection unit 215 may include, for example, a tracking unit 215a. The tracking unit 215a tracks each of the one or more detected crops between images adjacent in time series.

The tracking unit 215a may track each of the one or more crops, for example, further based on the result of supplement by a supplement unit 215b. Such a configuration can continuously track the crop by supplement even when the crop to be tracked is hidden by leaves or the like fails to be detected during the tracking.

The detection unit 215 may include, for example, the supplement unit 215b. The supplement unit 215b supplements the crop that is not detected by the detection unit 215 between the images adjacent in time series based on the displacement of the image sensor 311. Specifically, the supplement unit 215b may predict the position of each of one or more crops in the image after t seconds based on the displacement of the image sensor 311 over t seconds and supplement the undetected crop based on the result of the prediction.

### Calculation unit

The calculation unit 216 calculates the number of crops in the farm field. In, for example, a case where there are a plurality of calculation target regions or the like, the calculation unit 216 may calculate a statistical value of the crops in the farm field as the calculation for the number of crops. The statistical value may be, for example, a total value, an average value, a median value, a maximum value, a minimum value, a mode value, or the like of the number of crops. The calculation unit 216 may store count information indicating the calculation result in the storage unit 240 in association with the measurement data.

The calculation unit 216 includes a first calculation unit 216a. The first calculation unit 216a calculates the number of crops (hereinafter, also referred to as a "first number") in the overlapping region identified by the identification unit 212.

For example, the first calculation unit 216a may calculate the number of crops in each of the regions of the plurality of images corresponding to the overlapping region and adopt, as the first number, the number of the crops in the region having a largest number as a result of the calculation. Specifically, the first calculation unit 216a may adopt the maximum value from among the numbers of crops calculated in the regions of the plurality of images corresponding to the overlapping region.

The above configuration can accurately calculate the number of crops without a missing count even if the crop is undetected in some of the images corresponding to the overlapping region of the plurality of images, if the crop is detected in another image, the number calculated in the other image is adopted.

The first calculation unit 216a may calculate, as the first number, the average value of the numbers of crops in the respective regions of the plurality of images corresponding to the overlapping region, for example. Such a configuration can perform leveling even if there is a difference in the number of crops calculated between the plurality of images corresponding to the overlapping region.

The first calculation unit 216a may calculate the first number of crops further based on the result of the integration by the integration unit 213a, for example. The first calculation unit 216a may calculate the integrated crop, that is, a plurality of crops identified as the same crop, as one crop. Such a configuration can integrate, even in a case where the image capturing directions of the first image sensor and the second image sensor are not parallel to each other or the like, the crops imaged by the respective image sensors by matching the coordinate systems, calculate the number of the integrated crops, and accurately calculate the number of crops in the overlapping region.

The first calculation unit 216a may calculate the first number in the overlapping region further based on, for example, the result of the tracking by the tracking unit 215a. Such a configuration can accurately calculate the number of crops even if the regions overlap between adjacent images of the time-series images.

The calculation unit 216 includes a second calculation unit 216b. The second calculation unit 216b calculates the number of crops in the non-overlapping region other than the overlapping region in each of the regions of the plurality of images (hereinafter, also referred to as a "second number").

The second calculation unit 216b may calculate the number of crops in the synthetic image as the second number of crops in the non-overlapping region. That is, since the overlapping portion in the synthetic image including a plurality of images is free of the problem of redundant counting, the second calculation unit 216b calculates the number of crops with the region of the synthetic image regarded as the non-overlapping region. Such a configuration can accurately calculate the number of crops in the specific region by appropriately using the synthetic image.

The second calculation unit 216b may calculate the second number in the non-overlapping region further based on the result of the tracking, for example. Such a configuration can accurately calculate the number of crops even if the regions overlap between adjacent images of the time-series images.

The first calculation unit 216a may calculate the first number based on, for example, the result of the determination on whether each of the one or more crops is incomplete by the detection unit 215. Specifically, the first calculation unit 216a may exclude the crop determined to be incomplete from the calculation for the first number. In other words, the first calculation unit 216a may not count the incomplete crop in the overlapping region. On the other hand, the second calculation unit 216b may set the crop determined to be incomplete as a target of the calculation for the second number. The roles of the first calculation unit 216a and the second calculation unit 216b may be reversed, and the incomplete crop may be counted by the first calculation unit 216a. Such a configuration can prevent the crop located in both the overlapping region and the non-overlapping region from being redundantly calculated in the overlapping region and the non-overlapping region.

The calculation unit 216 includes a third calculation unit 216c. The third calculation unit 216c calculates the number of crops (hereinafter, also referred to as "third number") in the specific region based on the first number calculated by the first calculation unit 216a and the second number calculated by the second calculation unit 216b.

The above configuration allows the third calculation unit 216c to calculate the number of crops in the specific region based on the number of crops calculated in each of the overlapping region and the non-overlapping region. Therefore, the number of crops can be calculated in consideration of the overlap between the plurality of images. Therefore, the third calculation unit 216c can avoid calculation of the redundant number (redundant counting) even with a plurality of captured images including the crops partially overlapping to avoid omission of imaging. Therefore, the third calculation unit 216c can accurately calculate the number of crops in the specific region of the farm field.

The third calculation unit 216c may, for example, sum the second number and a number obtained by dividing the first number by the number of the plurality of images forming the overlapping region, and calculate the third number based on the result of the summing. Such a configuration allows the third calculation unit 216c to calculate the number of crops in the specific region in consideration of the number of overlapping images.

### Communication unit

The communication unit 220 transmits and receives various types of data such as the measurement data to and from the measurement device 300 and/or the other information processing device 200 via the network N.

### Input/output unit

The input/output unit 230 transmits and receives the measurement data and the like to and from an external device such as a display device or an external storage device.

### Storage unit

The storage unit 240 stores the identification information of the crop, the crop attribute information, the count information, the measurement data, and/or the like in association with each other. The storage unit 240 may store each data by using a database management system (DBMS) or may store each information by using a file system. When the DBMS is used, the storage unit 240 may provide a table for each data and manage such pieces of data by associating the tables with each other.

### 4. Operation example

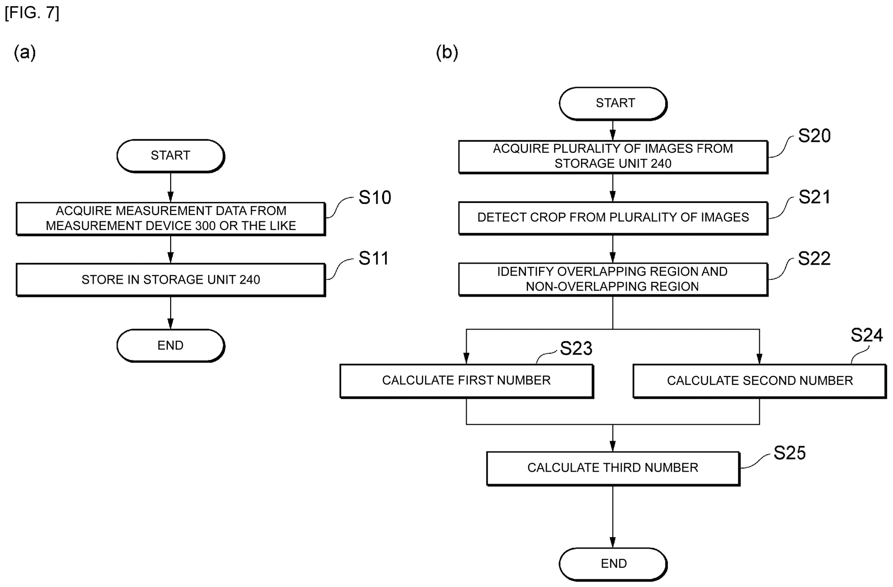

With reference to FIG. 7, an operation example of the information processing device 200 will be described. The order of the processes described below is an example, and may be changed as appropriate.

FIG. 7(a) is a flowchart illustrating a flow of processing of acquiring measurement data in the information processing device 200. As illustrated in FIG. 7(a), the acquisition unit 211 of the information processing device 200 acquires the measurement data from the measurement device 300 or the other information processing device 200 (step S10). The acquisition unit 211 stores the acquired measurement data in the storage unit 240 on a time basis (step S11).

FIG. 7(b) is a flowchart illustrating a flow of processing of calculating the crop in the information processing device 200. As illustrated in FIG. 7(b), the acquisition unit 211 of the information processing device 200 acquires, from the storage unit 240, a plurality of images captured by the one or more image sensors 311 in the specific region of the farm field and including one or more crops (step S20). The detection unit 215 detects each of one or more crops in each of the plurality of acquired images (step S21). The identification unit 212 identifies the overlapping region where the regions of the plurality of images overlap each other and the non-overlapping region other than the overlapping region in each of the regions of the plurality of images (step S22). Note that the order of the step S21 and step S22 may be reversed.

The first calculation unit 216a of the information processing device 200 calculates the first number of crops in the overlapping region (step S23). The second calculation unit 216b calculates the second number of crops in the non-overlapping region in parallel with step S22 (step S24). Step S23 and step S24 may be processed in series, and in the case of processing in series, any one of these may be executed first. The third calculation unit 216c calculates the third number of crops in the specific region based on the first number and the second number (step S25).

### 5. Hardware configuration

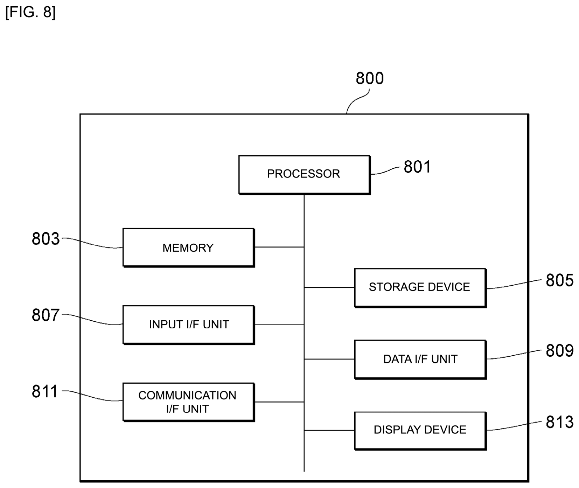

With reference to FIG. 8, an example of a hardware configuration of the information processing device 200 described above implemented by a computer 800 will be described. The functions of the respective devices may be implemented in cooperation by a plurality of devices.

As illustrated in FIG. 8, the computer 800 includes a processor 801, a memory 803, a storage device 805, an input I/F unit 807, a data I/F unit 809, a communication I/F unit 811, and a display device 813.

The processor 801 controls various types of processing in the computer 800 by executing a program stored in the memory 803. For example, the functional units and the like included in the control unit 210 of the information processing device 200 can be implemented by the processor 801 executing a program temporarily stored in the memory 803.

The memory 803 is a storage medium such as a random-access memory (RAM), for example. The memory 803 temporarily stores a program code of a program executed by the processor 801 or data necessary for executing the program.

The storage device 805 is a nonvolatile storage medium such as a hard disk drive (HDD) or a flash memory for example. The storage device 805 stores an operating system or various programs for implementing the above-described configurations. In addition, the storage device 805 can store a table for registering the measurement data, the crop attribute information, and the like, and a DB for managing the table. Such a program or data is loaded onto the memory 803 as necessary, to be referred to by the processor 801.

The input I/F unit 807 is a device for accepting an input from a user. Specific examples of the input I/F unit 807 include a keyboard, a mouse, a touch panel, various sensors, a wearable device, and the like. The input I/F unit 807 may be connected to the computer 800 via an interface such as a universal serial bus (USB) for example.

The data I/F unit 809 is a device for inputting data from the outside of the computer 800. Specific examples of the data I/F unit 809 include a drive device for reading data stored in various storage media and the like. The data I/F unit 809 may be provided outside the computer 800. In such a case, the data I/F unit 809 is connected to the computer 800 via an interface such as a USB for example.

The communication I/F unit 811 is a device for performing data communication with an external device of the computer 800 using a wire or wirelessly using the Internet N. The communication I/F unit 811 may be provided outside the computer 800. In this case, the communication I/F unit 811 is connected to the computer 800 via an interface such as a USB for example.

The display device 813 is a device that displays various types of data and information. Specific examples of the display device 813 include a liquid crystal display, an organic electro-luminescence (EL) display, a display of a wearable device, and the like. The display device 813 may be provided outside the computer 800. In this case, the display device 813 is connected to the computer 800 via, for example, a display cable and the like. When a touch panel is used as the input I/F unit 807, the display device 813 can be configured integrally with the input I/F unit 807.

The above-described embodiment is an example for describing the present invention, and the present invention is not intended to be limited to the embodiment. The present invention can be variously modified without departing from the gist thereof. Furthermore, those skilled in the art can adopt embodiments in which each element described below is replaced with an equivalent element, and such embodiments are also included in the scope of the present invention.

### [Modification Examples]

The present invention has been described based on the above embodiment, but the following cases are also included in the present invention.

### Modification Example 1

In the above embodiment, an example of synthesizing the images of crops based on the overlapping region identified by the identification unit 212 has been described, but a method of synthesizing an image according to the present embodiment is not limited thereto. The synthesis unit 214 may synthesize the images of crops based on, for example, the marker object in the image, instead of the overlapping region. The marker object may be any object as long as it is an object that serves as a reference among objects provided for cultivating crops, as described in the example of FIG. 5(a), for example.

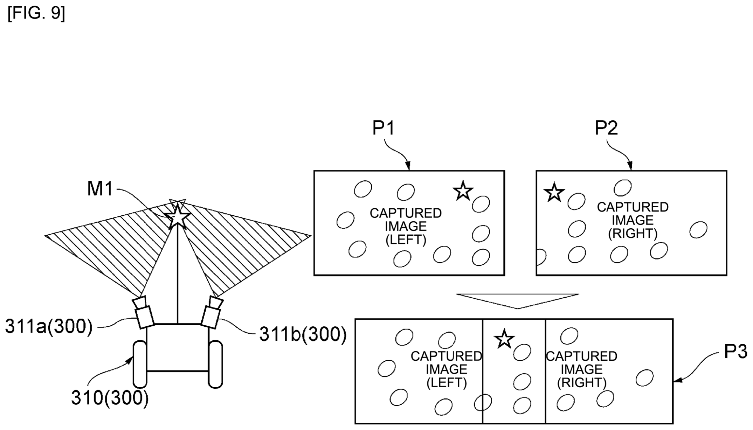

FIG. 9 is a schematic view illustrating an example of an image capturing method and image synthesizing processing by the mobile sensor 310. As illustrated in FIG. 9, in the smart agriculture system 1, for example, the left image P1 and the right image P2 respectively from the left image sensor 311a and the right image sensor 311b may be synthesized to generate a synthetic image P3. For alignment or the like at the time of the synthesizing, the plurality of images may be captured with an overlapping region provided therebetween.

The left image sensor 311a and the right image sensor 311b may set a marker object and capture images with the marker object included in the imaging range (particularly, the overlapping region). Then, the information processing device 200 may perform matching such as alignment based on the marker object in each of the left image P1 and the right image P2, to generate one synthetic image P3.

### Modification Example 2

In the above embodiment, an example of synthesizing two or more images among a plurality of images to be the target in the specific region acquired by the acquisition unit 211 has been described, but the image synthesizing processing according to the present embodiment is not limited thereto. For example, the synthesis unit 214 may synthesize all of the plurality of target images based on the overlapping region or the marker object. The third calculation unit 216c may calculate the third number of crops in the specific region based on the synthetic image thus obtained by the synthesizing. Such a configuration can calculate the number of crops in the specific region by using the marker object without identifying the overlapping region and without dividing the calculation of the number of crops between the overlapping region and the non-overlapping region.

### Modification Example 3

At least part of each configuration in the information processing device 200 according to the above-described embodiment may be included in the measurement device 300. For example, the function of the information processing device 200 of detecting a crop in an image, that is, the function implemented by the detection unit 215 may be the function of the measurement device 300. In this case, the information processing device 200 may acquire information indicating the result of the detection from the measurement device 300 and execute processing such as identification of the overlapping region and calculation of the number of crops.

Aspects of the present embodiment include the following disclosures.

### Supplementary Note 1

An information processing device (200) including:
an acquisition unit (211) configured to acquire a plurality of images captured by one or more imaging devices (311) in a specific region of a farm field and including one or more crops;
an identification unit (212) configured to identify an overlapping region overlapping between regions of the plurality of images;
a first calculation unit (216a) configured to calculate a first number of the crops in the overlapping region;
a second calculation unit (216b) configured to calculate a second number of the crops in a non-overlapping region other than the overlapping region in each of the regions of the plurality of images; and
a third calculation unit (216c) configured to calculate a third number of the crops in the specific region based on the first number and the second number.

### Supplementary Note 2

An information processing method including;
by a computer (200),
acquiring a plurality of images captured by one or more imaging devices (311)
in a specific region of a farm field and including one or more crops; identifying an overlapping region overlapping between regions of the plurality of images;
calculating a first number of the crops in the overlapping region;
calculating a second number of the crops in a non-overlapping region other than the overlapping region in each of the regions of the plurality of images; and
calculating a third number of the crops in the specific region based on the first number and the second number.

### Supplementary Note 3

A program causing a computer (200) to execute:
an acquisition function (211) of acquiring a plurality of images captured by one or more imaging devices (311) in a specific region of a farm field and including one or more crops;
an identification function (212) of identifying an overlapping region overlapping between regions of the plurality of images;
a first calculation function (216a) of calculating a first number of the crops in the overlapping region;
a second calculation function (216b) of calculating a second number of the crops in a non-overlapping region other than the overlapping region in each of the regions of the plurality of images; and
a third calculation function (216c) of calculating a third number of the crops in the specific region based on the first number and the second number.

### REFERENCE SIGNS LIST

1 Smart agriculture system, 200 Information processing device, 210 Control unit, 211 Acquisition unit, 212 Identification unit, 213 Coordinate processing unit, 214 Synthesis unit, 215 Detection unit, 216 Calculation unit, 220 Communication unit, 230 Input/output unit, 240 Storage unit, 300 Measurement device, 310 Mobile sensor, 311 Image sensor

## Claims

1. An information processing device (200), comprising:
an acquisition unit (211) configured to acquire a plurality of images captured by one or more imaging devices (311) in a specific region of a farm field and including one or more crops;
an identification unit (212) configured to identify an overlapping region overlapping between regions of the plurality of images;
a first calculation unit (216a) configured to calculate a first number of the crops in the overlapping region;
a second calculation unit (216b) configured to calculate a second number of the crops in a non-overlapping region other than the overlapping region in each of the regions of the plurality of images; and
a third calculation unit (216c) configured to calculate a third number of the crops in the specific region based on the first number and the second number.

2. The information processing device (200) according to claim 1, wherein the first calculation unit (216a) calculates the number of the crops in each of the regions of the plurality of images corresponding to the overlapping region and adopts, as the first number, the number of the crops in the region having a largest number as a result of the calculation.

3. The information processing device (200) according to claim 1, wherein the first calculation unit (216a) calculates, as the first number, an average value of the numbers of the crops in each of the regions of the plurality of images corresponding to the overlapping region.

4. The information processing device (200) according to any one of claims 1 to 3, wherein the third calculation unit (216c) sums the number obtained by dividing the first number by the number of the plurality of images forming the overlapping region and the second number and calculates the third number based on a result of the summing.

5. The information processing device (200) according to claim 1, further comprising
a synthesis unit (214) configured to synthesize the plurality of images based on the overlapping region and generate a synthetic image, wherein
the second calculation unit (216b) calculates, as the second number, the number of the crops in the synthetic image.

6. The information processing device (200) according to claim 1, wherein
the one or more imaging devices (311) comprise a first imaging device and a second imaging device,
the information processing device (200) comprises
a coordinate processing unit (213) configured to cause coordinate systems of the image captured by the first imaging device and the image captured by the second imaging device to match based on relative positions of the first imaging device and the second imaging device and
an integration unit (213a) configured to integrate the crops in the overlapping region based on a center coordinate of each of the crops included in the images with the coordinate systems matched, and
the first calculation unit (216a) calculates the first number further based on a result of the integration.

7. The information processing device (200) according to claim 1 or 2, wherein
the one or more imaging devices (311) comprise a first imaging device and a second imaging device, and
the identification unit (212) identifies, as the overlapping region, a region where a region of an image captured by the first imaging device and a region of an image captured by the second imaging device overlap each other.

8. The information processing device (200) according to claim 1 or 2, wherein
the acquisition unit (211) acquires, as the images, images of the crops captured by the one or more imaging devices (311) along a predetermined direction, and
the identification unit (212) identifies, as the overlapping region, a region formed by overlapping end portions of the plurality of images captured in rows adjacent to each other among a plurality of rows along the predetermined direction.

9. The information processing device (200) according to claim 1 or 2, wherein
the plurality of images are time-series images captured by the imaging devices (311), and
the identification unit (212) identifies, as the overlapping region, a region overlapping between the images adjacent in time series.

10. The information processing device (200) according to claim 9, wherein
the acquisition unit (211) acquires a displacement of the imaging devices (311) when the one or more imaging devices (311) capture images of the crops while moving, and
the identification unit (212) identifies the overlapping region based on the displacement.

11. The information processing device (200) according to claim 1 or 2, wherein
the plurality of images are time-series images captured by the imaging devices (311),
the information processing device (200) comprises
a detection unit (215) configured to detect each of the one or more crops in each of the time-series images and
a tracking unit (215a) configured to track each of the one or more crops detected between the images adjacent in time series,
the first calculation unit (216a) calculates the first number in the overlapping region further based on a result of the tracking, and
the second calculation unit (216b) calculates the second number in the non-overlapping region further based on the result of the tracking.

12. The information processing device (200) according to claim 11, wherein
the acquisition unit (211) acquires a displacement of the imaging devices (311) when the one or more imaging devices (311) capture images of the crops while moving,
the information processing device (200) comprises a supplement unit (215b) configured to supplement the crops not detected by the detection unit (215) between the images adjacent in time series based on the displacement, and
the tracking unit (215a) tracks each of the one or more crops further based on a result of the supplement.

13. An information processing method, comprising:
by a computer (800),
acquiring a plurality of images captured by one or more imaging devices (311) in a specific region of a farm field and including one or more crops;
identifying an overlapping region overlapping between regions of the plurality of images;
calculating a first number of the crops in the overlapping region;
calculating a second number of the crops in a non-overlapping region other than the overlapping region in each of the regions of the plurality of images; and
calculating a third number of the crops in the specific region based on the first number and the second number.

14. A program causing a computer (800) to execute:
an acquisition function (211) of acquiring a plurality of images captured by one or more imaging devices (311) in a specific region of a farm field and including one or more crops;
an identification function (212) of identifying an overlapping region overlapping between regions of the plurality of images;
a first calculation function (216a) of calculating a first number of the crops in the overlapping region;
a second calculation function (216b) of calculating a second number of the crops in a non-overlapping region other than the overlapping region in each of the regions of the plurality of images; and
a third calculation function (216c) of calculating a third number of the crops in the specific region based on the first number and the second number.
